# EUROPEAN PATENT APPLICATION

(11) **EP 1 669 898 A2**
(43) Date of publication of application: **14.06.2006**
(21) Application number: 05257327.6
(22) Date of filing: 29.11.2005
(51) Int. Cl.: G06F 17/30

(54) **File system path processing device and method**

(30) Priority: 02.12.2004 KR 2004100568
(71) Applicant: Samsung Electronics Co., Ltd., Suwon-si, Gyeonggi-Do (KR)
(72) Inventor: Kwon, Moon-sang, Seoul (KR)
(74) Representative: Robinson, Ian Michael

(57) **Abstract**

A file system path processing device (100) and a method thereof are provided. Particularly, a file system path processing device (100) and a method which enable directories or files to be easily searched for from where they are located are provided. The device includes a user input unit (110) that receives a path name input by a user, which includes a node extension (200) and an object name, and a processing unit (120) that generates a number of nodes at a predetermined layer and an object at one node among the generated nodes, where the one node corresponds to the object name. The processing unit (120) also enables the object to be accessible by determining the one node where the object is located by referencing the node extension (200).

## Description

Apparatuses and methods consistent with the present invention relate to a file system path processing device and a method thereof, and more particularly, to a file system path processing device and a method which enable directories or files to be easily searched for from where they are located.

In general, electronic devices, such as home appliances, communication devices, and set-top boxes, use portable storage media for storing and processing data. Examples of portable storage media include hard disc drives, floppy disks, universal serial bus (USB) flash drives (UFDs), secure digital (SD) cards, memory sticks, multimedia memory cards (MMCs), and compact flash cards.

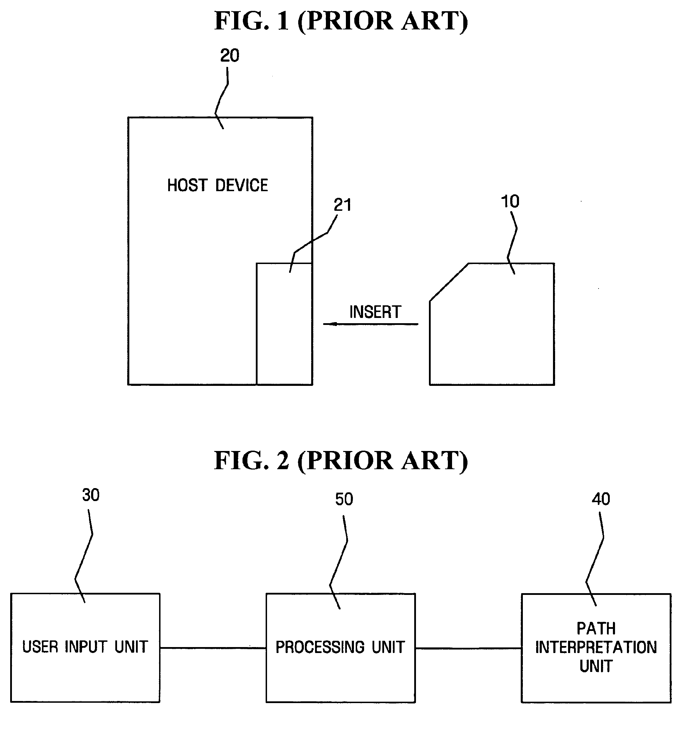

Referring to Figure 1, a portable storage medium 10 is connected to a host device 20 by being inserted into a slot 21 formed in the host device 20. Once connected to the host device 20, the portable storage medium 10 receives data from the host device 20 and stores the data. The host device 20 includes a file system which stores data in the portable storage medium 10 as directories and files and manages the directories and files, and stores the file system in the portable storage medium 10 together with the data.

To represent simple data as meaningful data, that is, from binary data of 0 and 1 to data in the form of, for example, a file or a directory, a file system is processed for obtaining abstract data, e.g., a volume, a data block map, data blocks, directories and files. A file system operation refers to an operation of indexing and modifying the abstract data processed in the file system.

In order to designate a predetermined file or directory, the file system is implemented in an abstract form in a hierarchical tree structure to then use a name of a path created by connecting a root node and a node where the predetermined file or directory is located.

For example, in a case where a file system designates a file 'ls' using a path name '/user/bin/ls', a first symbol '/' indicates a root node in the path name. The symbol '/' may also be used to discriminate the file or directory at a lower layer of the root node. If a predetermined node may have a child node, it may be referred to as a directory. On the other hand, if a predetermined node cannot have any child node, it may be referred to as a file.

Figure 2 is a block diagram of a conventional file system path processing device.

Referring to Figure 2, the system includes a user input unit 30 to which a user issues a request for processing a predetermined file or directory, a path interpretation unit 40 which interprets a path name for the predetermined file or directory, and a processing unit 50 which processes the predetermined file or directory upon the request of the user.

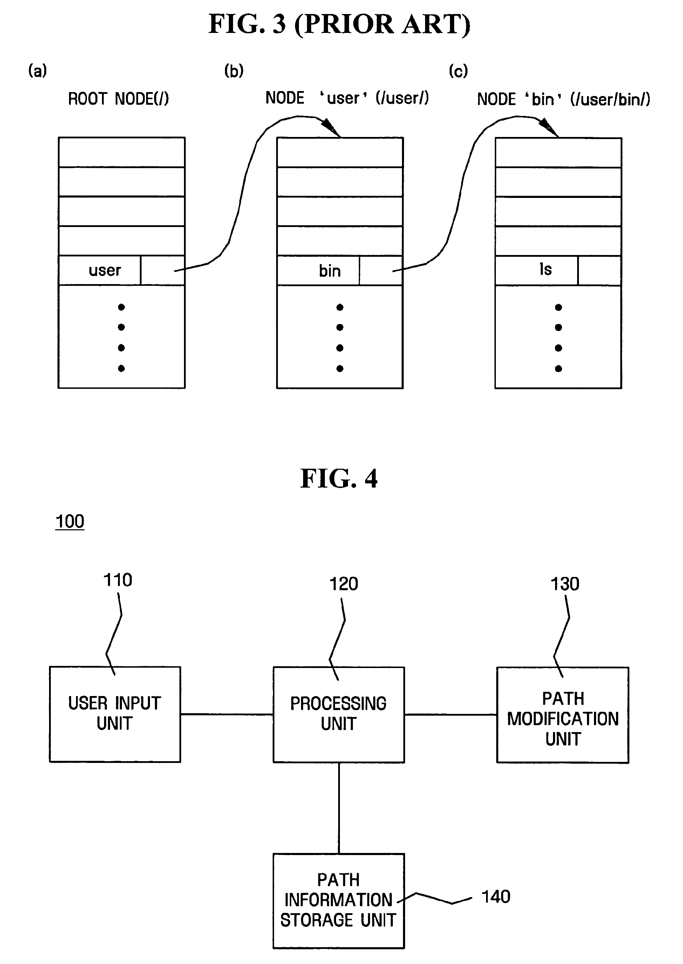

Figure 3 is a diagram illustrating a conventional method of accessing to a file or directory upon the request of a user using the system of Figure 2.

Referring to Figure 3, in a case where a user wishes to access to a file 'ls' with a path name '/user/bin/ls', the user issues a request for processing the file 'ls' to the user input unit 30 using the path name '/user/bin/ls'.

Prior to interpretation of the path name '/user/bin/ls', nodes ranging from the root node to a node where the pertinent file 'ls' is located are connected. Here, the processing the file 'ls' requested from the user may include adding, reading, writing, or deleting.

In detail, the path interpretation unit 40 determines whether a node 'user' (/user/) exists among a plurality of children nodes of the root node '/' in the file system, as shown in Figure 3(a).

Thereafter, if the node 'user' is found, the path interpretation unit 40 detects whether a node 'bin' (/user/bin/) exists among a plurality of children nodes of the node 'user', as shown in Figure 3(b). Thereafter, if the node 'bin' is found, the path interpretation unit 40 detects whether a node 'ls' (/user/bin/ls) exists among a plurality of children nodes of the node 'bin', as shown in Figure 3(c). If the node 'ls' is found, the processing unit 50 processes the node 'ls' upon the request of the user.

The path interpretation unit 40 searches through all nodes from the root node to the node where the file 'ls' is located to find the file 'ls'. Therefore, if there are only a few nodes between the root node and a node corresponding to a directory or file requested by the user, the path interpretation unit 40 can search for the requested directory or file within a relatively short period of time. However, if there are a considerable number of nodes between the root node and the node corresponding to the requested directory or file, it may take the path interpretation unit 40 a considerable amount of time to search for the requested directory or file. For example, in the case of searching for a predetermined directory or file using a file allocation table (FAT) file system, the predetermined directory or file must be sequentially compared with other directories and files. As the number of directories or files to be compared with the predetermined directory or file increases, a time required for searching for the predetermined directory or file also increases.

Therefore, there has been a need to develop ways to reduce a time required for searching a considerable number of directories or files for a predetermined directory or file.

U.S. Patent No. 6,643,654 discloses a file system which enables a directory, a file, or a data stream to be quickly accessed by representing a path name, a file name, and a named data stream as, for example, "/DIR1/foo:stream1", using symbols '/' and ':'. However, this patented file system requires a user to learn about in advance the location of a directory or file that he or she wishes to navigate. Therefore, when there are a considerable number of directories or files to be searched, a considerable time would be required for searching for a desired directory or file.

According to the present invention there is provided an apparatus and method as set forth in the appended claims. Preferred features of the invention will be apparent from the dependent claims, and the description which follows.

The present invention provides a file system path processing device and a method thereof in which a predetermined file or directory can be quickly searched for and processed by appropriately modifying how a path name for the predetermined file or directory is designated or interpreted.

The aspects, features and advantages of the present invention will become clear to those skilled in the art upon review of the following description, the attached drawings and appended claims.

According to an aspect of the present invention, there is provided a file system path processing device including a user input unit that receives a path name input by a user, the path name comprising a node extension and an object name; and a processing unit that generates a number of nodes at a predetermined layer and generates an object at one node among the generated nodes, the one node corresponding to the object name.

According to another aspect of the present invention, there is provided a file system path processing device including a user input unit that receives a path name input by a user, the path name comprising a node extension and an object name that are used for accessing to a predetermined object located at one node among a plurality of nodes generated at a predetermined layer; and a processing unit that determines the one node where the predetermined object is located by referencing the node extension and enables accessing to the predetermined object.

According to still another aspect of the present invention, there is provided a file system path processing device comprising: a user input unit that receives a path name input by a user, the path name comprising a node extension and an object name; and a processing unit that generates a number of nodes at a predetermined layer and an object at one node among the generated nodes, the one node corresponding to the object name, and enables the object to be accessible by determining the one node where the object is located by referencing the node extension.

According to still another aspect of the present invention, there is provided a file system path processing method including receiving a path name input by a user, the path name comprising a node extension and an object name; and generating, according to the path name, a number of nodes at a predetermined layer and generating an object at one node among a plurality of nodes, the one node corresponding to the object name.

According to a further aspect of the present invention, there is provided a file system path processing method including receiving a path name input by a user, the path name comprising a node extension and an object name that are used for accessing to a predetermined object included in one node among a plurality of nodes generated at a predetermined layer; and determining the one node where the predetermined object is located by referencing the node extension and enabling accessing to the predetermined object.

The above and other features and advantages of the present invention will become more apparent by describing in detail exemplary embodiments thereof with reference to the attached drawings in which:
Figure 1 is a block diagram of a typical portable storage medium connected to a host device;
Figure 2 is a block diagram of a conventional file system path processing device;
Figure 3 is a diagram illustrating a conventional file system path processing method;
Figure 4 is a block diagram of a file system path processing device according to an exemplary embodiment of the present invention;
Figure 5 is a diagram illustrating a path name according to an exemplary embodiment of the present invention;
Figure 6A is a diagram illustrating a path name according to another embodiment of the present invention;
Figure 6B is a diagram illustrating a path name according to still another embodiment of the present invention;
Figure 7 is a flowchart illustrating a method of generating an object using a file system path processing method according to an exemplary embodiment of the present invention;
Figure 8 is a flowchart illustrating a method of accessing to an object using a file system path processing method according to an exemplary embodiment of the present invention; and
Figure 9 illustrates a file system path processing method according to an exemplary embodiment of the present invention.

The present invention will now be described more fully with reference to the accompanying drawings, in which exemplary embodiments of this invention are shown. Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which exemplary embodiments of the invention are shown.

Figure 4 is a block diagram of a file system path processing device 100 according to an exemplary embodiment of the present invention. Referring to Figure 4, the file system path processing device 100 includes a user input unit 110 which receives a path name comprising a node extension and the name of an object to be generated from a user, and a processing unit 120 generates an object by referencing the node extension included in the path name received by the user input unit 110 and/or enables the object to be accessible. Here, the node extension is an identifier specifying a real path to the object generated by the processing unit 120, which will be described later in further detail.

A node may be a directory or a file. In detail, a node that may have a child node is referred to as a directory, and a node that cannot have any child node is referred to as a file. In the following exemplary embodiments of the present invention, it is assumed that a node is a directory that may have another directory or a file as a child node.

Further in the following exemplary embodiments of the present invention, an object that may be generated at a node by the processing unit 120 may be a directory or a file. In a file system, a plurality of files or directories are abstracted in a hierarchical tree structure and are accessed by referencing the hierarchical tree structure. In a file system, files or directories are treated as objects. Thus, in the the present exemplary embodiments, files or directories generated at a node are referred to as objects.

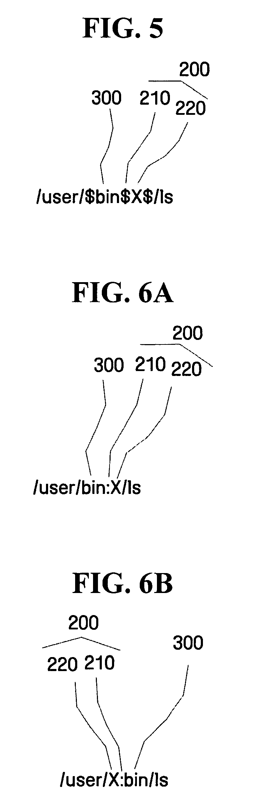

Referring to Figure 5, a user may generate an object at a predetermined node using a path name comprising a node extension 200 and an extended parent node name 300.

The node extension 200 comprises first node extensions 210 indicating whether nodes are to be generated at a predetermined layer or not, a second node extension 220 whose value X indicates the number of nodes to be generated at the predetermined layer, an extended parent node name 300 which is the name of an extended parent node of X nodes generated by referencing the second node extension 220. In other words, the user may indicate whether he or she wishes to generate as many nodes as children nodes of the extended parent node using the first node extensions 210 and may specify the number of nodes to be generated as children nodes of the extended parent node using the second node extension 220.

In the present exemplary embodiment, a symbol $ is used as a first node extension 210. However, a number, a letter, or a symbol other than the symbol $ may be used as a first node extension 210. In addition, more than one first node extension may be used, and the number of first node extensions included in the node extension 200 may be determined according to the purpose of use. The first node extensions 210 may also be used as a basis of determining whether the file system path processing device 100 according to an exemplary embodiment of the present invention enables a user to generate or to access to an object using the path name including the node extension 200. In other words, if the user uses the first node extensions 210, the processing of a file system path may be carried out by a method according to an exemplary embodiment of the present invention. However, if the user does not use the first node extensions 210, the processing of a file system path may be carried out in a conventional method.

In detail, as illustrated in Figure 5, three first node extensions 210 may be included in a path name, i.e., one ahead of the extended parent node name 300, another between the extended parent node name 300 and the second node extension 220, and the other behind the second node extension 220. Alternatively, as illustrated in Figure 6A, a symbol ':' may be located between the extended parent node name 300 and the second node extension 220 as the first node extension 210. Still alternatively, as illustrated in Figure 6B, the second node extension 220 may come ahead of the extended parent node name 300.

The second node extension 220 specifies a number of nodes to be generated as children nodes of an extended parent node 300. It is assumed that the second node extension 220 is set to 100 and that 100 nodes, i.e., zeroth through ninety ninth nodes, are generated as children nodes of the extended parent node with the extended parent node name 300 by referencing the second node extension 220.

If the user wishes to generate an object using a path name including first and second node extensions 210 and 220, the processing unit 120 may generate an object at a node corresponding to an output of a predetermined function which receives as input a name of the object to be generated and a value of the second node extension 220.

For example, it is assumed that the user wishes to generate an object with an object name 'ls' using a path name '/user/$bin$100$/'. In this case, the first node extension 210 corresponds to '$', the value of the second node extension 220 is '100', and the extended parent node name 300 is 'bin'.

Then, the processing unit 120 may generate 100 nodes at a lower layer of the bin node as an extended parent node and generates the object at one node among the generated nodes, the one node corresponding to an output of a hash function hash( ) as the node extension function having 'ls' and '100' as inputs. While the present exemplary embodiment has been described that both the object name 'ls' and the value '100' of the second node extension 220 are used as elements of the node extension function, only the object name 'ls', which is an essential element of the node extension function, may be input to the node extension function. Alternatively, the object name 'ls' may be input to the hash function hash( ) together with a variety of elements representing the path name. In other words, the processing unit 120 generates zeroth through ninety ninth nodes as children nodes of the extended parent node 'bin'. Thereafter, if the output of the hash function hash( ), i.e., hash(ls, 100), is determined to be, for example, 3, the processing unit 120 may change the path name '/user/$bin$100$/' into a path name '/user/bin/3/ls'.

The hash function hash( ) is provided as an example for a better understanding of the present invention, and thus, a function other than the hash function hash( ) may be used as a node extension function according to the purpose of use. In addition, it may be determined what type of function is to be used as the node extension function according to the value X of the second node extension 220. In other words, all possible functions may be candidates for the node extension function as long as they produce as many outputs as the value of the second node extension 220, that is, X.

In the present exemplary embodiment, the file system path processing device 100 may also include a path modification unit 130 which changes the path name input by the user according to an output of the node extension function and a path information storage unit 140 which stores path information regarding a node corresponding to the output of the node extension function.

Therefore, when the user wishes to access to an object generated by the processing unit 120, a node where the object is located can be quickly searched for by referencing the information stored in the path information storage unit 140.

In other words, the user can easily access to an object generated by the processing unit 120 by referencing a path name including the node extension 200 illustrated in Figure 5. For example, the user may access to the object 'ls' using the path name '/user/$bin$100$/ls'. In this case, the processing unit 120 determines whether the path name '/user/$bin$100$/ls' includes the node extension 200 and recognizes that the path name '/user/$bin$100$/ls' includes the node extension 200 and the output of the node extension function, i.e., hash(ls, 100), is 3.

In detail, the processing unit 120 determines whether nodes as children nodes of the node 'bin' have been generated at a lower layer of the 'bin' node as the extended parent node by referencing the first node extension 210 of the node extension 200 included in the path name input by the user. In addition, the processing unit 120 determines the number of nodes that have been generated as the children nodes of the node 'bin' by referencing the second node extension 220. Thereafter, the processing unit 120 inputs the object name 'ls' and the value of the second node extension 220, i.e., '100', to the hash function hash( ), thereby obtaining a value '3' as the output of the hash function hash( ).

The path modification unit 130 replaces the node extension 200 included in the path name input by the user with the output of the hash function hash( ), i.e., 3, so that the path name '/user/$bin$100$/ls' is changed into '/user/bin/3/ls'. Therefore, it is possible to search for a predetermined node where an object that the user wishes to access to is located without the need to search through all nodes. However, the aforementioned path name change may be performed by the processing unit without employing the path modification unit 130 according to an exemplary embodiment.

The processing unit 120 may read or delete all of the 100 nodes generated by referencing the node extension 200.

For example, if the user inputs a read command readdir( ) together with a path name '/user/$bin$100$/', the processing unit 120 sequentially reads a plurality of nodes '/user/bin/0' through '/user/bin/99' and returns the contents of the nodes to the user. If the user inputs a delete command rmdir( ) together with the path name '/user/$bin$100$/', the processing unit 120 deletes all of the nodes '/user/bin/0' through '/user/bin/99' and then deletes an extended parent node '/user/bin' of the nodes '/user/bin/0' through '/user/bin/99'.

A file system path processing method according to an exemplary embodiment of the present invention will now be described in detail.

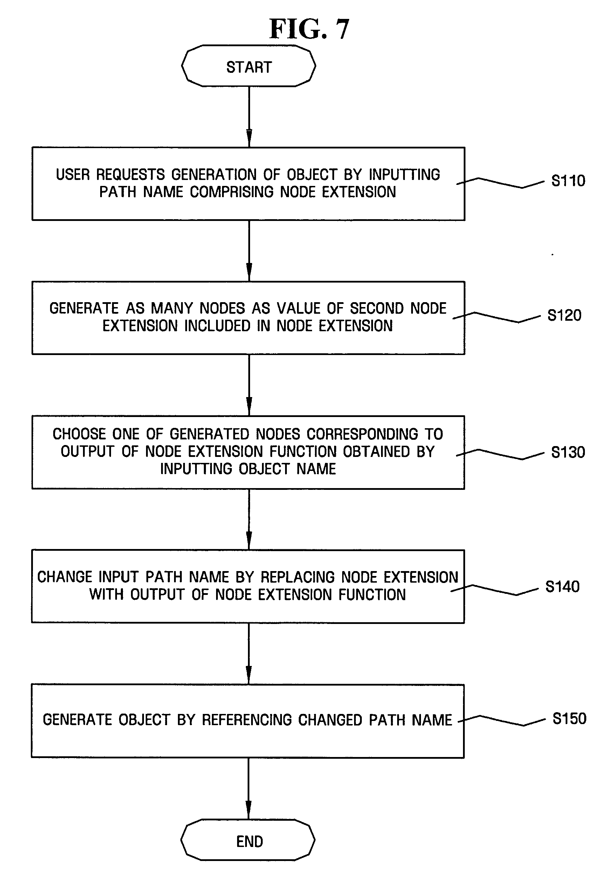

Figure 7 is a flowchart illustrating a method of generating an object using a file system path processing method according to an exemplary embodiment of the present invention.

Referring to Figures 5 and 7, in operation S110, a user requests generation of a predetermined object by inputting the path name including the node extension 200 and an object name to the user input unit 110. Here, the path name includes the node extension 200 and the extended parent node name 300. The node extension 200 includes the first node extension 210 and the second node extension 220, as illustrated in Figure 5.

In operation S120, the processing unit generates as many nodes as the value of the second node extension 220 as children nodes of a node (hereinafter referred to as an extended parent node) where the predetermined object is to be generated.

The nodes generated in operation S120 may be named in different ways using a variety of numbers, letters, and/or symbols. In operation S130, the processing unit 120 chooses one of the generated nodes corresponding to an output of a node extension function having the object name as an input.

Information regarding the node chosen in operation S130 is stored in the path information storage unit 140. Thus, the user can easily access to the predetermined object later by referencing the information stored in the path information storage unit 140. The user may access to the predetermined object using the node extension function, rather than by referencing the information stored in the path information storage unit 140.

In operation S140, the processing unit 120 changes the input path name into a path name including the information regarding the node chosen in operation S130.

In operation S150, the predetermined object is generated by referencing the path name obtained in operation S140.

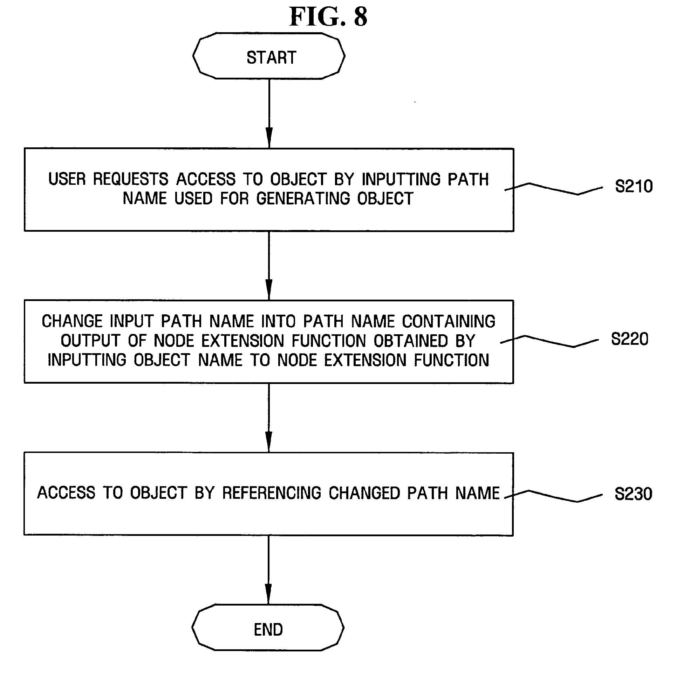

Figure 8 is a flowchart illustrating a method of accessing to an object generated using the method of Figure 7 according to an exemplary embodiment of the present invention.

Referring to Figure 8, in operation S210, a user requests access to a predetermined object by inputting an object name and a path name which have been used for generating the predetermined object.

In operation S220, the path modification unit 130 changes the input path name with reference to an output of a node extension function having the object name as a user input. The path modification unit 130 may change the path name input by the user by referencing information stored in the path information storage unit 140.

In operation S300, the processing unit 120 accesses to the predetermined object by referencing the changed path name.

Therefore, it is possible to reduce a time required for searching for the predetermined object because the predetermined object is readily accessible without the need to search through all nodes until finding a node where the predetermined object is located.

In addition, if the user wishes to verify the contents of nodes generated by referencing a node extension 200 included in the input path name or to delete the nodes, the processing unit 120 may sequentially verify the contents of the nodes or sequentially delete the nodes.

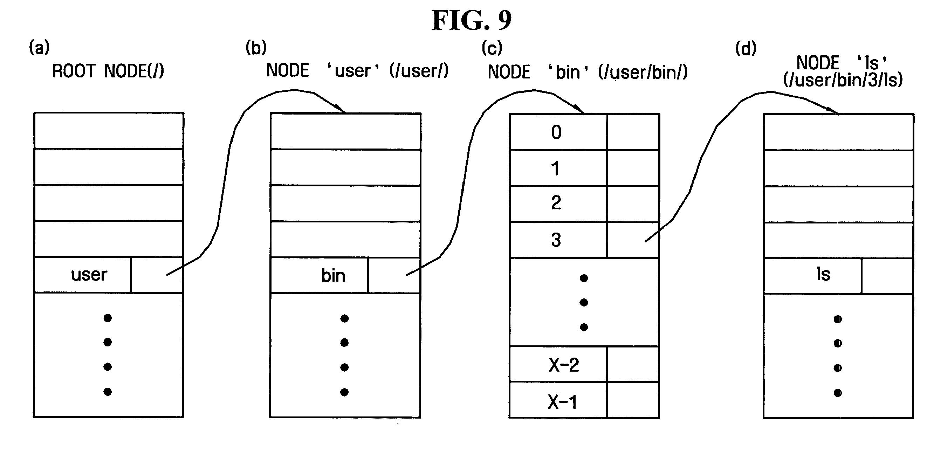

The file system path processing method according to an exemplary embodiment of the present invention will now be described in further detail with reference to Figure 9.

If a user requests generation of a predetermined object by inputting a path name '/user/$bin$X$/ls' including a node extension and an object name 'ls', the processing unit 120 determines whether a node 'user' exists among children nodes of a root node '/', as illustrated in Figure 9(a).

If the node 'user' is found from among the children nodes of the root node '/', it is determined whether a node 'bin', which is an extended parent node, exists among children nodes of the node 'user' (/user/), as illustrated in Figure 9(b). If the node 'bin' (/user/bin/) is found from among the children nodes of the node 'user', the processing unit 120 generates X nodes by referencing a second node extension 220 included in the input path name '/user/$bin$X$/ls', as illustrated in Figure 9(c).

Thereafter, the processing unit 120 determines one node among the X nodes, the one node corresponding to an output of a node extension function having the object name 'ls' and the value of the second node extension 220 as input values, and generates an object with a name 'ls' at the location of the one node according to the determination result, as illustrated in Figure 9(d).

In addition, accessing to a generated object is enabled in a similar manner to the above-described object generating process.

As described above, in the file system path processing device and method, there is no need to search through all nodes to find a node where a desired object is located, and thus it is possible to considerably reduce a time required for searching for the object.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A file system path processing device (100) comprising:
a user input unit (110) that receives a path name input by a user, the path name comprising a node extension (200) and an object name; and
a processing unit (120) that generates a number of nodes at a predetermined layer and generates an object at one node among the generated nodes, the one node corresponding to the object name.

2. The file system path processing device (100) of claim 1, wherein the node extension (200) comprises:
a first node extension (210) that indicates whether nodes are to be generated at the predetermined layer; and
a second node extension (220) that indicates the number of nodes to be generated at the predetermined layer.

3. The file system path processing device (100) of claim 2, wherein the processing unit (120) generates the object at the one node among the generated nodes, the one node corresponding to an output of a node extension (200) function having the object name as an input.

4. The file system path processing device (100) of claim 3, wherein the processing unit (120) generates the object at the one node by changing the path name input into a path name comprising the output of the node extension (200) function.

5. The file system path processing device (100) of claim 4, further comprising a path information storage unit that stores information regarding the one node,
wherein the information comprises the changed path name.

6. The file system path processing device (100) of claim 3, 4 or 5, further comprising:
a path modification unit (130) that replaces the node extension (200) included in the input path name with the output of the node extension (200) function corresponding to the one node; and
a path information storage unit (140) that stores information regarding the one node.

7. A file system path processing device (100) comprising:
a user input unit (110) that receives a path name input by a user, the path name comprising a node extension (200) and an object name that are used for accessing to a predetermined object located at one node among a plurality of nodes generated at a predetermined layer; and
a processing unit (120) that determines the one node where the predetermined object is located by referencing the node extension (200) and enables accessing to the predetermined object.

8. The file system path processing device (100) of claim 7, wherein the node extension (200) comprises:
a first node extension (210) that indicates whether nodes have been generated at the predetermined layer; and
a second node extension (220) that indicates the number of nodes generated at the predetermined layer.

9. The file system path processing device (100) of claim 8, wherein the processing unit (120) determines the one node among the generated nodes as being a node where the predetermined object is located, the one node corresponding to an output of a node extension (200) function having the object name as an input.

10. The file system path processing device (100) of claim 9, wherein the processing unit (120) determines the one node by changing the path name input into a path name comprising the output of the node extension (200) function.

11. The file system path processing device (100) of claim 10, further comprising a path information storage unit (140) that stores information regarding the one node, wherein the information comprises the changed path name.

12. The file system path processing device (100) of claim 9, 10 or 11, further comprising:
a path modification unit (130) that replaces the node extension (200) included in the input path name with the output of the node extension function corresponding to the one node; and
a path information storage unit (140) that stores information regarding the one node.

13. A file system path processing device (100) comprising:
a user input unit (110) that receives a path name input by a user, the path name comprising a node extension (200) and an object name; and
a processing unit (120) that generates a number of nodes at a predetermined layer and an object at one node among the generated nodes, the one node corresponding to the object name, and enables the object to be accessible by determining the one node where the object is located by referencing the node extension (200).

14. The file system path processing device (100) of claim 13, wherein the node extension (200) comprises:
a first node extension (210) that indicates whether nodes are to be generated at the predetermined layer or whether the nodes have been generated at the predetermined layer; and
a second node extension (220) that indicates the number of nodes to be generated or the number of nodes that have been generated at the predetermined layer.

15. The file system path processing device (100) of claim 14, wherein the processing unit (120) generates the object at the one node among the generated nodes, and determines the one node among the generated nodes as being a node where a node where the object is located, the one node corresponding to an output of a node extension function having the object name as an input

16. The file system path processing device (100) of claim 15, wherein the processing unit (120) generates and determines the object at the one node by changing the path name input into a path name comprising the output of the node extension function.

17. The file system path processing device (100) of claim 16, further comprising a path information storage unit (140) that stores information regarding the one node, wherein the information comprises the changed path name.

18. The file system path processing device (100) of claim 15, 16 or 17, comprising:
a path modification unit (130) that replaces the node extension (200) included in the input path name with the output of the node extension function corresponding to the one node; and
a path information storage unit (140) that stores information regarding the one node.

19. A file system path processing method comprising:
receiving a path name input by a user, the path name comprising a node extension (200) and an object name; and
generating, according to the path name, a number of nodes at a predetermined layer and generating an object at one node among a plurality of nodes, the one node corresponding to the object name.

20. The file system path processing device (100) of claim 19, wherein the node extension (200) comprises:
a first node extension (210) that indicates whether nodes are to be generated at the predetermined layer; and
a second node extension (220) that indicates the number of nodes to be generated at the predetermined layer.

21. The file system path processing method of claim 20, wherein the generating of the object comprises generating the object at the one node among the generated nodes, the one node corresponding to an output of a node extension function having the object name as an input.

22. The file system path processing method of claim 21, wherein generating of the object at the one node comprises changing the input path name into a path name comprising the output of the node extension function.

23. The file system path processing method of claim 22, further comprising storing information regarding the one node, wherein the information comprises the changed path name.

24. The file system path processing device (100) of claim 21, further comprising:
replacing the node extension (200) included in the input path name with the output of the node extension function corresponding to the one node; and
storing information regarding the one node.

25. A file system path processing method comprising:
receiving a path name input by a user, the path name comprising a node extension (200) and an object name that are used for accessing to a predetermined object located at one node among a plurality of nodes generated at a predetermined layer; and
determining the one node where the predetermined object is located by referencing the node extension (200) and enabling accessing to the predetermined object.

26. The file system path processing method of claim 25, wherein the node extension (200) comprises:
a first node extension (210) that indicates whether nodes have been generated at the predetermined layer; and
a second node extension (220) that indicates the number of nodes generated at the predetermined layer.

27. The file system path processing method of claim 26 comprising determining the one node among the generated nodes as being a node where the predetermined object is located, the one node corresponding to an output of a node extension function having the object name as an input.

28. The file system path processing method of claim 27, wherein determining the one node comprises changing the path name input into a path name comprising the output of the node extension function.

29. The file system path processing method of claim 28, further comprising storing information regarding the one node, wherein the information comprises the changed path name.

30. The file system path processing method of claim 27, further comprising:
replacing the node extension (200) included in the path name input with an output of the node extension function corresponding to the one node; and
storing information regarding the one node.
